Europäisches Patentamt

European Patent Office

Office européen des brevets

(11) Publication number: **0 108 467**
**A1**

(12) **EUROPEAN PATENT APPLICATION**

(21) Application number: **83303229.5**

(22) Date of filing: **03.06.83**

(51) Int. Cl.³: **H 01 M 8/24**

(30) Priority: **07.10.82 US 433321**

(43) Date of publication of application:
**16.05.84 Bulletin 84/20**

(84) Designated Contracting States:
**DE FR GB IT NL**

(71) Applicant: **WESTINGHOUSE ELECTRIC CORPORATION**
**Westinghouse Building Gateway Center**
**Pittsburgh Pennsylvania 15235(US)**

(72) Inventor: **Hoover, Delmer Quintin, Jr.**
**2018 Garrick Drive**
**Pittsburgh Pennsylvania(US)**

(74) Representative: **van Berlyn, Ronald Gilbert**
**23, Centre Heights**
**London, NW3 6JG(GB)**

(54) **Fuel cell systems.**

(57) Electrochemical cell system (10) comprising a plurality of electrically connected fuel cells (12) and at least one reforming and cooling module (42) disposed between selected fuel cells arranged in a stack and shaped in cross-section as a polygon. Each fuel cell has an electrolyte (16) positioned between a pair of bipolar plates (14) which plates define oxidant channels (28) and fuel channels (26) with each of the channels having an inlet on one face of the polygon and an outlet on an opposite face. The reforming and cooling module has passages with an entry on one face of the polygon and an exit on the opposite face with a conducting means connecting the passages exit to the fuel channels inlet.

EP 0 108 467 A1

./...

FIG. I

**JITLE MODIFIED**
**see front page**

1

ELECTROCHEMICAL CELL SYSTEMS

This invention relates to electrochemical cell systems.

Among the various types of fuel cell systems are those which include subassemblies of two bipolar plates between which is supported a carbonate electrolyte in a matrix. The subassemblies, herein referred to as fuel cells, are oriented one atop another and electrically connected, typically in series, to form a fuel cell stack. Frequently, such systems use a hydrocarbon feedstock which must be broken down in the presence of steam, or reformed, in an endothermic reaction to form hydrogen and oxides of carbon. Operation of the fuel cell, for example, the reaction of hydrogen and oxygen to produce heat, electrical energy and water, is exothermic, and cooling of the cell components is necessary in order to maintain component integrity. Gaseous cooling fluids have therefore been passed through the stacks to remove heat. For high temperature electrolytes, such as molten carbonate, the heat removal function is served by the oxidant stream. Accordingly, two fluid mediums, a fuel, and an oxidant/cooling fluid flow in some manner into and out of the fuel cell stack. The disadvantages of this practice are described in U.S. Patent Specification No. 4,182,795. Such systems require a high circulatory power, detracting from overall system efficiency, and can subject downstream components, such as heat exchangers, to undesirable reaction products carried with the depleted oxidant.

U.S. Patent Specification No. 4,182,795, describes an improvement wherein a reformable fuel from a single manifold is diverted through two parallel passages, within the fuel cell, one of which is in communication with the cell electrolyte and in which the basic fuel cell reaction takes place, and the second of which is to provide cooling through the endothermic reforming reaction. Upon passage through these parallel passages, the resultant gases are rejoined in a second common manifold and subjected to treatment for removal of waste products. After treatment, this partially reformed fuel is supplied to another fuel cell or recirculated for further reaction and reforming. The disadvantage of this process is that it results in dilution of the reformed fuel and unreformed feedstock streams by each other and undesirable dilution of both streams by reaction products from the fuel cell reactions.

U.S. Patent Specification No. 4,276,355 provides fuel cell stack configurations which simplify construction and sealed ducting requirements, while providing for separation of the cooling and oxidant stream. In preferred form, a plurality of fuel cells are provided in a stack, with a cooling module periodically positioned between two selected fuel cells. The cross-sectional shape of the stack, in each individual cell or module, is that of an elongated polygon having opposite sides which are parallel. A cooling fluid, such as air, is ducted into and out of the closer faces by manifolds which seal to the stack at the corners. In a hexagonal arrangement manifolds are sealed to the stack at the corner and fuel flows through one pair of opposite faces, and oxidant through the remaining pair. A rectangular arrangement includes, in addition to corner seals, seals on the central longitudinal portion of the short sides of the rectangle, so that fuel and oxidant ducts are arranged side by side on the short faces. In this manner the fuel and oxidant flow through the long cross-sectional dimension of the stack, and the cooling fluid flows through the short dimension.

The disadvantage of this process is that it does not take advantage of the exothermic fuel cell reaction to reform the fuel.

What is needed is an apparatus which cools the fuel cell in an efficient manner, while avoiding cross contamination or dilution of the various fuel streams involved. What is also needed is an apparatus which utilizes the fuel cell reaction heat in an efficient manner.

Accordingly, the present invention resides in an electrochemical cell system which comprises a plurality of electrically connected fuel cells and at least one reforming and cooling module disposed between selected fuel cells, said fuel cells and cooling module arranged in a stack and shaped in cross section as a polygon having pairs of oppositely disposed peripheral faces; each said fuel cell having an electrolyte positioned between a pair of bipolar plates, said bipolar plates defining oxidant channels for transporting an oxidant in reacting communication with said electrolyte, and fuel channels for transporting a fuel in reacting communication with said electrolyte, said fuel and oxidant channels each having an inlet on one peripheral face of said polygon and an outlet on an opposite peripheral face; said reforming and cooling module having passages, said passages having an entry on one peripheral face of said polygon and an exit on an opposite peripheral face; and a conducting means connecting said passages exit to said fuel channels inlet.

In order that the invention can be more clearly understood, convenient embodiments thereof will now be described, by way of example, with reference to the accompanying drawings in which:

Fig. 1 is an expanded perspective view of a fuel cell stack showing primary components;

Fig. 2 is a perspective view of a hexagonal fuel cell stack;

Fig. 3 is a schematic plan view of a hexagonal fuel cell stack particularly showing features of a sealed manifold arrangement;

Fig. 4 is a schematic plan view of a rectangular fuel cell stack particularly showing features of a sealed manifold arrangement; and

Fig. 5 is a perspective view of a rectangular fuel cell stack.

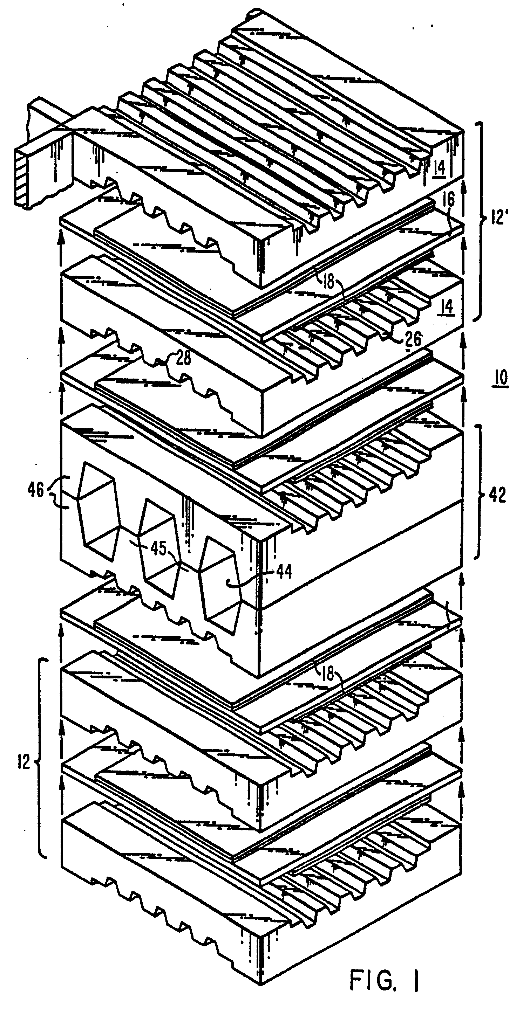

Referring to Fig. 1, an electrochemical fuel cell system includes a plurality of repeating fuel cells 12 arranged in a stack 10 such that the cells 12 are electrically connected in series. Cell stacks can also be arranged in parallel.

An individual cell, such as the cell 12', includes two bipolar plates 14 between which are sandwiched an electrolyte, for example, in the form of a ceramic matrix 16 containing a mixture of transition metal carbonates (such as $Na_2CO_3$, $K_2CO_3$, $Li_2CO_3$). Other materials which incorporate an electronically insulating and ionically conducting material can also be utilized. The plates 14 can comprise a material such as nickel and are disposed on opposite sides of the electrolyte matrix 16 and the electrodes 18. Each electrode 18 can also be of a nickel based material.

The bipolar plates 14 are provided with a set of process channels, including the fuel channels 26 and the oxidant channels 28. Thus, when held together by means well known, such as external frame, each cell represents a substantially sealed unit.

An oxidant, such as air or other oxygen-containing material, flows through the oxidant channels 28, and a fuel, such as hydrogen, flows through the fuel channels 26. Electrical power and heat are generated by the interaction of the fuel and oxidant through the electrodes and electrolyte matrix 16. An exemplary fuel cell 12 utilizes hydrogen fuel, air as the oxidant and molten carbonates of transition metals as the electrolyte.

A substantial amount of heat is generated by the electrochemical reaction, and, accordingly, the stack 10 includes reforming and cooling modules 42. Dependent upon the operating temperature uniformity desired and cell thickness and materials, the reforming and cooling modules 42 are placed between fuel cells 12 at selected positions within the stack 10. A reforming and cooling module 42 may, for example, be placed between approximately every third cell to every eighth cell.

Each reforming and cooling module 42 is preferably comprised of a material, such as nickel, similar to that of the bipolar plates 14, in the exemplary system and may contain additional catalyst, such as a nickel based material. The reforming and cooling module 42 may include a plurality of cooling passages 44, separated by ribs 45. The reforming and cooling module 42 may be formed of one piece, or, as shown, two sections 46 may be separately fabricated and subsequently sealed together. The reforming and cooling passages 44 are preferably substantially rectangular, although other geometric shapes are equally possible. A reformable fuel, such as a hydrocarbon, mixed with steam, flows through the reforming and cooling passages 44.

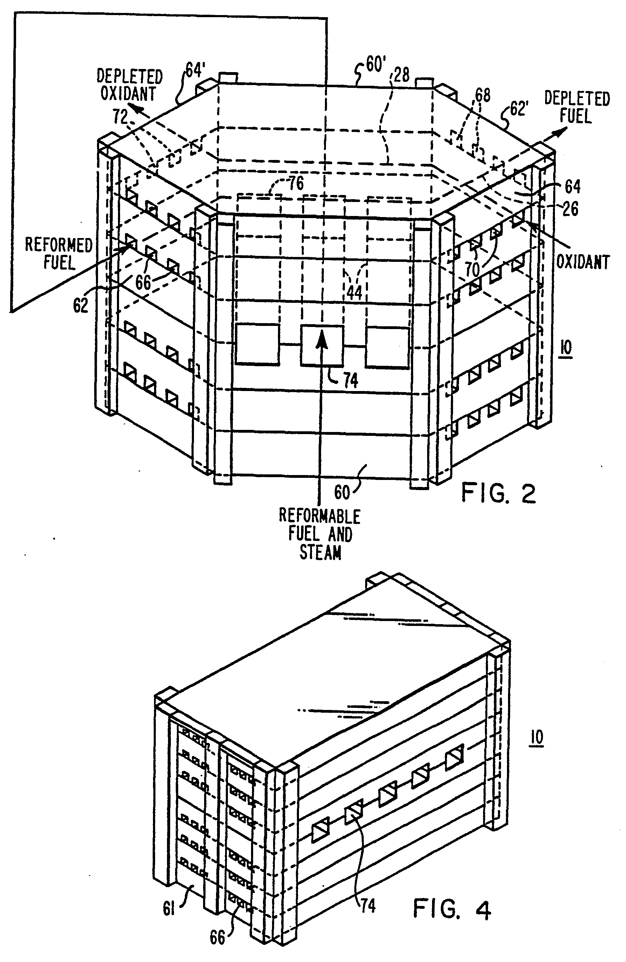

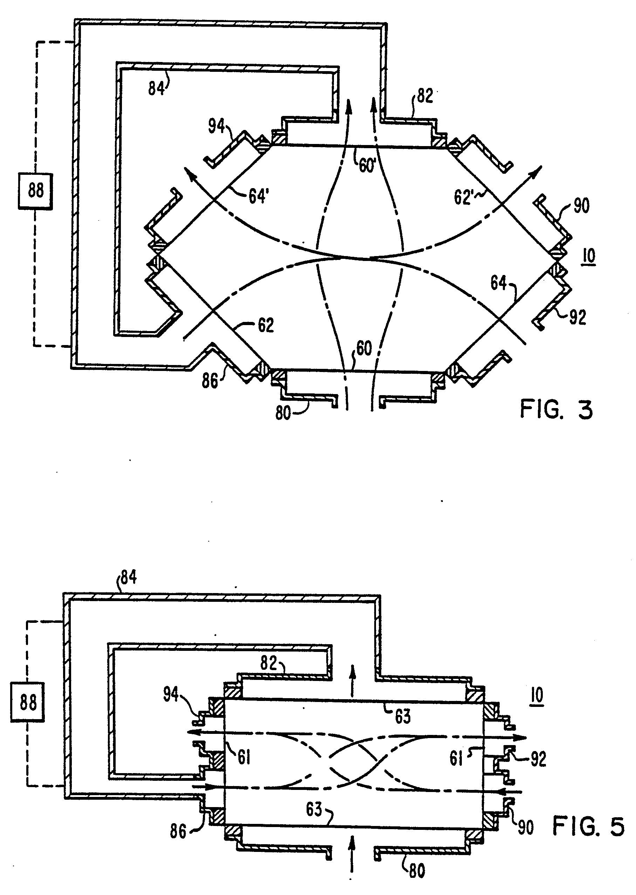

Referring now to Figs. 2 and 3, there is shown a preferred configuration for a fuel cell stack 10 and system wherein the cross-sectional shape of the stack 10, and the individual components such as the bipolar plates 14 and reforming and cooling module 42, is that of an elongated polygon having pairs of oppositely disposed substantially parallel faces 60, 62, 64, such as the pair 60 and 60', the pair 62 and 62', and the pair 64 and 64'. The term elongated, as used herein, refers to a polygon wherein the faces of one pair are longer than the faces of the remaining pair(s). The distance across flats, between opposed faces, may be shorter between the longer pair of faces than between any other pairs. In Fig. 2, the elongated faces are identified by reference numerals 60 and 60'.

The fuel and oxidant streams may flow generally in either the same or opposite directions. In Figs. 2 and 3, the fuel and oxidant are arranged to flow in generally opposite directions. Reformed fuel is ducted to fuel inlets 66, flows through fuel channels 26, and exits the stack 10 through fuel outlets 68. Oxidant is ducted to oxidant inlets 70, flows through oxidant channels 28, and exits the stack 10 through oxidant outlets 72. As shown by the broken flow lines, the flow channels 26, 28 are preferably arranged in three segments, the inlet and outlet segments being generally perpendicular to the entrance and exit faces and a central segment being generally parallel to the long faces 60, 60'. The fuel 26 and oxidant channels 28 are, however, similarly configured. The channels 26, 28 can also be arranged to vary the flow area in reacting contact with the electrolyte as described in U.S. Patent Specification No. 4,276,355.

The fluid mixture of reformable fuel and steam is ducted to reforming and cooling passage entries 74, flows through reforming and cooling passages 44, and exits the stack 10 through reforming and cooling passage exits 76. The cooling passages 44 are preferably arranged to provide variable cooling, as described in U.S. Patent Specification No. 4,292,379. The reformed fuel is then conveyed to the fuel inlet 66 for use as set forth above.

The reformable fuel and steam mixture is supplied to the reforming and cooling passage entries 74 by a reformable fuel and steam mixture manifold 80, and the reformed fuel from the reforming and cooling passage exits 76 flows to a reformed fuel manifold 82. This reformed fuel is conveyed for instance by a duct 84, to a fuel inlet manifold 86 which supplies the fuel inlets 66. Alternatively, the reformed fuel may be ducted to a means for increasing the $H_2$ concentration, such as a shift converter 88, prior to ducting to the fuel inlet manifold 86.

Similar manifolds may be used as a depleted fuel outlet manifold 90, oxidant inlet manifold 92 and oxidant outlet manifold 94.

Referring now to Figs. 4 and 5, there is shown an alternate stack 10 configuration. Here the stack 10 is rectangular. Additionally, fuel and oxidant manifolds are not provided across an entire face, but at intermediate positions on each of two opposite faces 61. Accordingly, the reformable fuel and steam mixture is supplied to the reforming and cooling passage entries 74 by a reformable fuel and steam mixture manifold 80, and the reformed fuel from the reforming and cooling passage exits 76 flows to a reformed fuel manifold 82. This reformed fuel is conveyed for instance by a duct 84, to a fuel inlet manifold 86 which supplies the fuel inlets 66. Alternatively, the reformed fuel may be ducted to a means for increasing the $H_2$ concentration, such as a shift converter 88, prior to ducting to the fuel inlet manifold 86.

Similar manifolds may be used as a depleted fuel outlet manifold 90, oxidant inlet manifold 92 and oxidant outlet manifold 94.

This invention is applicable to any combination of fuel cell and reformable hydrocarbon fuel wherein the fuel cell operating temperature level lies in the range of temperatures where reformation of the hydrocarbon fuel is practical. An exemplary combination comprises the molten carbonate fuel cell and methane. The preferred operating temperature level for molten carbonate fuel cells lies in the 600°C to 700°C range which is an appropriate temperature for catalytic steam reforming of methane.

8

CLAIMS:

1. An electrochemical cell system characterized in that said system comprises a plurality of electrically connected fuel cells and at least one reforming and cooling module disposed between selected fuel cells, said fuel cells and cooling module arranged in a stack and shaped in cross section as a polygon having pairs of oppositely disposed peripheral faces; each said fuel cell having an electrolyte positioned between a pair of bipolar plates, said bipolar plates defining oxidant channels for transporting an oxidant in reacting communication with said electrolyte, and fuel channels for transporting a fuel in reacting communication with said electrolyte, said fuel and oxidant channels each having an inlet on one peripheral face of said polygon and an outlet on an opposite peripheral face; said reforming and cooling module having passages, said passages having an entry on one peripheral face of said polygon and an exit on an opposite peripheral face; and a conducting means connecting said passages exit to said fuel channels inlet.

2. A system according to claim 1, characterized in that said system further comprises a plurality of conduit structures each sealed to a peripheral face of said stack and forming an ingress manifold common to each fuel channel inlet, an egress manifold common to each fuel channel outlet, an ingress manifold common to each oxidant channel inlet, an egress manifold common to each oxidant channel outlet, an ingress manifold common to each reforming and cooling passage entry, an egress manifold common to each cooling passage exit, and wherein said conducting means comprises a conveying duct connected from said reforming and cooling passage egress manifold to said fuel channel ingress manifold.

3. A system according to claim 2, characterized in that the polygon is a hexagon having six peripheral faces and six corners and each of the manifolds is sealed to a different one of said six peripheral faces.

4. A system according to claim 3, characterized in that each manifold is sealed to a respective peripheral face at said corners.

5. A system according to claim 2, characterized in that the polygon is a rectangle having four peripheral faces and four corners, said cooling passages ingress and egress manifolds being sealed to different opposite peripheral faces, and said fuel channel ingress manifold being sealed to the same peripheral face as said oxidant channel ingress manifold.

6. A system according to claim 5, characterized in that the cooling passage ingress and egress manifolds are sealed to said respective peripheral faces at said corners and each said fuel channel and oxidant channel manifold is sealed to said respective peripheral face at one corner and at an intermediate position along the respective peripheral face.

7. A system according to claim 1, 2, 3 or 4, characterized in that the polygon is a hexagon having two 90° angles.

8. An electrochemical cell system characterized in that said system comprises a plurality of electrically connected fuel cells and a reforming and cooling module disposed between selected fuel cells, said fuel cells and reforming and cooling module arranged in a stack and shaped in cross section as a hexagon having three pairs of oppositely disposed, substantially parallel peripheral faces; each said fuel cell having an electrolyte positioned between a pair of bipolar plates, said plates defining oxidant channels and fuel channels, said oxidant channels having an inlet on one face of one of said pairs and an outlet on the oppositely disposed face, said fuel channels having an inlet on one face of another of said pairs and an outlet on the oppositely disposed face; said reforming and cooling module defining cooling passages having an entry on one face of said pairs and an exit on the oppositely disposed face; and a conducting means connecting said cooling passages exit to said fuel channels inlet.

9. A system according to claim 8, characterized in that the hexagon has two 90° angles.

10. A system according to claim 8 or 9, characterized in that the oxidant channels comprise three segments, a first segment generally perpendicular to the face of the oxidant inlet, a second segment generally parallel to the cooling passages faces, and a third segment generally perpendicular to the face of said oxidant outlet.

11. A system according to claim 8, 9 or 10, characterized in that the fuel channels comprise three segments, a first segment generally perpendicular to the face of said fuel inlet, a second segment generally parallel to said cooling passages faces, and a third segment generally perpendicular to the face of said fuel outlet.

12. An electrochemical cell system characterized in that said system comprises a plurality of electrically connected fuel cells and a reforming and cooling module disposed between selected fuel cells, said fuel cells and module arranged in a stack and shaped in cross section as a rectangle having two pairs of oppositely disposed, substantially parallel peripheral faces; each said fuel cell having an electrolyte positioned between a pair of bipolar plates, said plates defining oxidant channels and fuel channels, said oxidant and fuel channels each having an inlet and an outlet, said oxidant inlet and said fuel outlet being positioned on one of said faces, separated along said face by a manifold seat, and said oxidant outlet and fuel inlet being positioned on said opposite face, separated along said other face by a manifold seat, manifolds to said faces in conjunction with said manifold seats, including a manifold common to said oxidant inlets, a manifold common to said oxidant outlets, a manifold common to said fuel inlets and a manifold common to said fuel outlets, said reforming and cooling module defining passages having an entry on one of said faces not including an oxidant manifold or a fuel manifold, and an exit on the oppositely disposed face, and manifolds sealed to each of said faces not including an oxidant manifold or a fuel manifold, one of said manifolds being common to said entries of said cooling passages and another one of said manifolds being common to said exits of said cooling passages; and a conveying duct connected from said cooling passage exits manifold to said fuel channel inlets manifold.

13. A system according to claim 12, characterized in that the fuel channels comprise three segments, a first segment substantially parallel to said faces on which are positioned said fuel inlet channels, a crossover segment substantially perpendicular to said first segment, and a third segment substantially parallel to said first segment.

14. A system according to claim 13, characterized in that the cross sectional area of said crossover segment is larger than the cross-sectional area of either of said other segments.

15. A system according to claim 12, 13 or 14, characterized in that the oxidant channels comprise three segments, a first segment substantially parallel to said faces on which are positioned said oxidant inlet channels, a crossover segment substantially perpendicular to said first segment, and a third segment substantially parallel to said first segment.

16. An electrochemical cell system characterized in that said system comprises a plurality of electrically connected fuel cells and at least one reforming and cooling module disposed between selected fuel cells, said fuel cells and cooling module arranged in a stack and shaped in cross section as a polygon having pairs of oppositely disposed peripheral faces; each said fuel cell having an electrolyte positioned between a pair of bipolar plates, said bipolar plates defining oxidant channels for transporting an oxidant in reacting communication with said electrolyte, and fuel channels for transporting a fuel in reacting communication with said electrolyte, said fuel and oxidant channels each having an inlet on one peripheral face of said polygon and an outlet on an opposite peripheral face; said reforming and cooling module having passages, said passages having an entry on one peripheral face of said polygon and an exit on an opposite peripheral face; a fuel processing means for chemical processing of a fuel; a conducting means connecting said passages to said processing means; and a conducting means connecting said processing means to said fuel channel inlet.

17. An electrochemical cell system characterized in that said system comprises a plurality of electrically connected fuel cells and a reforming and cooling module disposed between selected fuel cells, said fuel cells and module arranged in a stack and shaped in cross section as a rectangle having two pairs of oppositely disposed, substantially parallel peripheral faces; each said fuel cell having an electrolyte positioned between a pair of bipolar plates, said plates defining oxidant channels and fuel channels, said oxidant and fuel channels each having an inlet and an outlet, said oxidant inlet and said fuel outlet being positioned on one of said faces, separated along said face by a manifold seat, and said oxidant outlet and fuel inlet being positioned on said opposite face, separated along said other face by a manifold seat; manifolds to said faces in conjunction with said manifold seats, including a manifold common to said oxidant inlets, a manifold common to said oxidant outlets, a manifold common to said fuel inlets and a manifold common to said fuel outlets; said reforming and cooling module defining passages having an entry on one of said faces not including an oxidant manifold or a fuel manifold, and an exit on the oppositely disposed face; manifolds sealed to each of said faces not including an oxidant manifold or a fuel manifold, one of said manifolds being common to said entries of said cooling passages and another one of said manifolds being common to said exits of said cooling passages; a fuel processing means for chemical processing of a fuel; a conducting means connecting said passages to said processing means; and a conducting means connecting said processing means to said fuel channel inlet.

18. An electrochemical cell system characterized in that said system comprises a plurality of electrically connected fuel cells and a reforming and cooling module disposed between selected fuel cells, said fuel cells and module arranged in a stack and shaped in cross section as a rectangle having two pairs of oppositely disposed, substantially parallel peripheral faces; each said fuel cell having an electrolyte positioned between a pair of bipolar plates, said plates defining oxidant channels and fuel channels, said oxidant and fuel channels each having an inlet and an outlet, said oxidant inlet and said fuel inlet being positioned on one of said faces, separated along said face by a manifold; manifolds to said faces in conjunction with said manifold seats, including a manifold common to said oxidant inlets, a manifold common to said oxidant outlets, a manifold common to said fuel inlets and a manifold common to said fuel outlets, said reforming and cooling module defining passages having an entry on one of said faces not including an oxidant manifold or a fuel manifold, and an exit on the oppositely disposed face, and manifolds sealed to each of said faces not including an oxidant manifold or a fuel manifold, one of said manifolds being common to said entries of said cooling passages and another one of said manifolds being common to said exits of said cooling passages; and a conveying duct connected from said cooling passage exits manifold to said fuel channel inlets manifold.

19. A system according to claim 18, characterized in that the fuel channels comprise three segments, a first segment substantially parallel to said faces on which are positioned said fuel inlet channels, a crossover segment substantially perpendicular to said first segment, and a third segment substantially parallel to said first segment.

20. A system according to claim 19, characterized in that the cross sectional area of the crossover segment is larger than the cross-sectional area of either of the other segments.

21. A system according to claim 18, 19 or 20, characterized in that the oxidant channels comprise three segments, a first segment substantially parallel to said faces on which are positioned said oxidant inlet channels, a crossover segment substantially perpendicular to said first segment, and a third segment substantially parallel to said first segment.

22. An electrochemical cell system characterized in that said system comprises a plurality of electrically connected fuel cells and a reforming and cooling module disposed between selected fuel cells, said fuel cells and module arranged in a stack and shaped in cross section as a rectangle having two pairs of oppositely disposed, substantially parallel peripheral faces; each said fuel cell having an electrolyte positioned between a pair of bipolar plates, said plates defining oxidant channels and fuel channels, said oxidant and fuel channels each having an inlet and an outlet, said oxidant inlet and said fuel inlet being positioned on one of said faces, separated along said face by a manifold seat, and said oxidant outlet and fuel outlet being positioned on said opposite face, separated along said other face by a manifold seat; manifolds to said faces in conjunction with said manifold seats, including a manifold common to said oxidant inlets, a manifold common to said oxidant outlets, a manifold common to said fuel inlets and a manifold common to said fuel outlets; said reforming and cooling module defining passages having an entry on oné of said faces not including an oxidant manifold or a fuel manifold, and an exit on the oppositely disposed face; manifolds sealed to each of said faces not including an oxidant manifold or a fuel manifold, one of said manifolds being common to said entries of said cooling passages and another one of said manifolds being common to said exits of said cooling passages; a fuel processing means for chemical processing of a fuel; a conducting means connecting said passages to said processing means; and a conducting means connecting said processing means to said fuel channel inlet.

FIG. I

FIG. 2

FIG. 4

FIG. 3

FIG. 5

## EUROPEAN SEARCH REPORT

European Patent Office

Application number

EP 83 30 3229

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | US-A-3 488 226 (B.S. BAKER)<br>* Figure 1; claim 1; column 4, lines 55-68; column 6, lines 37-41 * | 1 | H 01 M 8/24 |
| X | GB-A-2 025 118 (ENERGY RESEARCH CORP.)<br>* Figures 1,2,4; claims 1,6,18,29; page 3, line 121 - page 4, line 58; page 4, lines 97-119 * | 1,2,12 ,16 | |
| Y | EP-A-0 039 235 (WESTINGHOUSE ELECTRIC CORPORATION)<br>* Whole document * | 1-22 | |
| Y | FR-A-1 553 361 (GENERAL ELECTRIC COMP.)<br>* Claims 1,6,8; figures 3,4; page 5, left-hand column, line 37 - right-hand column, line 42 * | 1 | TECHNICAL FIELDS SEARCHED (Int. Cl. ³)<br><br>H 01 M 8/24<br>H 01 M 8/00 |

The present search report has been drawn up for all claims

| Place of search | Date of completion of the search | Examiner |
|---|---|---|
| THE HAGUE | 13-01-1984 | D'HONDT J.W. |